# EUROPEAN PATENT APPLICATION

(11) **EP 2 485 304 A1**
(43) Date of publication of application: **08.08.2012**
(21) Application number: 10820143.5
(22) Date of filing: 29.09.2010
(51) Int. Cl.: H01M 4/48, H01G 9/058, H01M 4/36, H01M 10/052, H01M 10/0566

(54) **NEGATIVE ELECTRODE ACTIVE MATERIAL, METHOD FOR PRODUCING THE NEGATIVE ELECTRODE ACTIVE MATERIAL, AND LITHIUM ION SECONDARY BATTERY USING THE NEGATIVE ELECTRODE ACTIVE MATERIAL**

(30) Priority: 30.09.2009 JP 2009229006; 01.05.2010 JP 2010106032; 06.05.2010 JP 2010106124
(71) Applicant: Nippon Chemi-Con Corporation, Tokyo 141-8605 (JP); K & W Limited, Kunitachi-shi, Tokyo 186-0002 (JP)
(72) Inventor: NAOI, Katsuhiko, Kunitachi-shi Tokyo 186-0002 (JP); NAOI, Wako, Kunitachi-shi Tokyo 186-0002 (JP); ISHIMOTO, Shuichi, Tokyo 141-8605 (JP); TAMAMITSU, Kenji, Tokyo 141-8605 (JP)
(74) Representative: Staudt, Hans-Peter
(86) International application number: PCT/JP2010/005875
(87) International publication number: WO 2011/040022

(57) **Abstract**

Disclosed is a negative electrode active material which has a high capacity and good cyclability. The negative electrode active material comprises nanosize carbon particles and nanosize tin dioxide particles that are supported in a high-dispersion state on the nanosize carbon particles. The negative electrode active material has a high discharge capacity because of the reversible progress of a conversion reaction of tin dioxide (SnO₂+4Li⁺+4e⁻→ 2Li₂O+Sn) therein. In a charge-discharge cycle test within a voltage range of 0 to 2 V vs. an Li/Li⁺ electrode, the negative electrode active material shows a discharge capacity retention rate of about 90% even after 500 charge-discharge cycles at the rate 1C, which indicates excellent cyclability. Therefore, the negative electrode active material can be suitably used in a lithium ion secondary battery and a hybrid capacitor.

## Description

### BACKGROUND OF THE INVENTION

1. Field of the Invention

The present invention relates to a negative electrode active material with good cyclability and a method for producing the negative electrode active material. The present invention also relates to a lithium ion secondary battery using the negative electrode active material.

2. Description of the Related Art

A lithium ion secondary battery using a nonaqueous electrolytic solution with high energy density is widely used as a power source of information devices including cell phones and laptop computers. To cope with the increased electricity consumption that accompanies the enhanced performance of these information devices and the increased amount of information processed by them, enhancement of the discharge capacity of a lithium ion secondary battery is desired. Moreover, in the light of demands to decrease oil consumption, alleviate air pollution, and reduce carbon dioxide emissions that lead to global warming, there are expectations that low-emission vehicles including electric vehicles and hybrid cars will take the place of gasoline vehicles and diesel passenger cars. For the electrical source of the motor drive in these low-emission vehicles, the development of a large-scale lithium ion secondary battery with high energy density and power density, that is, with high-capacity density, is desired.

Nowadays, most lithium ion secondary batteries using a nonaqueous electrolytic solution have a lithium layer compound such as lithium cobalt oxide (LiCoO₂) as a positive electrode active material, graphite that occludes and releases lithium ions as a negative electrode active material, and a solution that is formed by dissolving a lithium salt such as lithium hexafluorophosphate (LiPF₆) into a nonaqueous solvent such as ethylene carbonate and propylene carbonate as an electrolytic solution. In order to increase the capacity of these lithium ion secondary batteries, the number of lithium ions that are occluded into or released from a negative electrode active material needs to be increased. However, the theoretical capacity of graphite calculated by LiC₆ occluding the maximum amount of lithium is 372 mAhg⁻¹, and the capacity of existing lithium ion secondary batteries is almost the same as the theoretical capacity. Therefore, the development and adoption of a negative electrode active material that could replace graphite would be indispensable in enabling the capacity of a lithium ion secondary battery to be increased further. The alternative material should demonstrate stable cyclability when the charge-discharge cycle is repeated.

Substitute candidates for graphite that have high capacity are metals that are alloyed with lithium, including aluminum, zinc and stannum. Stannum is especially preferred because it has a high theoretical capacity calculated by Li_{4.4}Sn of 994 mAhg⁻¹. However, there is a drawback in using stannum in that the volume expansion of stannum accompanied by occlusion of lithium is very large. When the volume of stannum is set as 100%, the volume of Li_{4.4}Sn can be as high as 358%. Therefore, when the charge-discharge cycle is repeated in a battery in which the negative electrode active material is stannum, a crack appears in the negative electrode and the electron conduction path, which is indispensable for the charge-discharge response, is destroyed because the volume change as a result of the occlusion and release of lithium is too large and, furthermore, only a few repetitions of the charge-discharge cycle result in a rapid decrease in the discharge capacity.

In order to solve this problem, a method has been suggested to alleviate the stress caused by the volume change of stannum by dispersing stannum in a matrix of a carbon material or of an oxide. A conductive carbon material acting as a matrix serves to secure the electron conduction path if the negative electrode active material receives mechanical damage due to the volume change of stannum and also alleviates the stress that occurs as a result of the volume change of stannum.

As for the negative electrode active material in which stannum is dispersed in the matrix of a carbon material, JP 2000-90916 A discloses a negative electrode active material in which stannum metal fine particles coated are highly dispersed in a carbonaceous matrix. The negative electrode active material is prepared by mixing tin dioxide as a stannum precursor and heat-treated coal tar pitch as a carbonaceous material precursor, powderizing the resulting mixture, and then heat-treating the resulting powder at 900 degrees Celsius. However, the discharge capacity of a half-cell that uses this negative electrode active material and lithium as a counter-electrode deteriorates to 60% or 91% after as few as four charge-discharge cycle tests and thus it does not demonstrate excellent cyclability.

One method to disperse stannum in the matrix of an oxide is to use tin dioxide as an active material. Tin dioxide occludes lithium by a reaction, as shown in the following chemical equations (I) and (II). The reaction described in equation (I), which causes reduction of tin dioxide and production of lithium oxide, is called a "conversion reaction," and the reaction in equation (II), which produces an alloy of stannum and lithium, is called an "alloying reaction."

SnO₂+4Li⁺ +4ₑ⁻ → 2Li₂O+Sn (I)

Sn+4.4Li⁺ +4,4e⁻ ⇄ Li_{4.4}Sn (II)

It is considered that lithium oxide produced by the conversion reaction acts as a matrix for stannum and alleviates the stress caused by the volume change of stannum in the alloying reaction zone and inhibits the agglomeration of stannum in the alloying reaction zone. Moreover, the theoretical capacity in the conversion reaction is 711 mAhg⁻¹, the theoretical capacity in the alloying reaction is 783 mAhg⁻¹, and thus the total theoretical capacity is as high as 1494 mAhg⁻¹. However, the conversion reaction was regarded as an irreversible reaction because lithium oxide is thermodynamically stable, and the large initial irreversible capacity due to the irreversibility of the conversion reaction was observed when tin dioxide was used as a negative electrode active material. Therefore, only the alloying reaction zone, which is a reversible reaction zone (voltage range of 0 to about 1 V vs. a Li/Li⁺ electrode), has been mainly utilized in a lithium ion secondary battery having tin oxide as a negative electrode active material.

In Journal of Power Sources 159 (2006) 345-348, there is disclosed a negative electrode active material composed of spherical porous tin dioxide particulates having a diameter of 0.5 to 1 µm that are fabricated via a spray pyrolysis technique. The tin dioxide spheres have primary crystals having an average size of about 5 nm. The stress caused by the volume change of stannum in the alloying reaction zone is inhibited by the matrix of lithium oxide and also by pores in the tin dioxide spheres. Concerning a half-cell that uses this negative electrode active material and lithium as a counter electrode, a charge-discharge cycle test is done at a current density of 100 mAg⁻¹ in the voltage range of 0.05 to 1.35 V vs. a Li/Li⁺ electrode. In the test, an initial irreversible capacity of 328 mAhg⁻¹ is observed, and the discharge capacity retention rate after 50 charge-discharge cycles is only 68% of the initial discharged capacity (601 mAhg⁻¹), which indicates insufficient cycle stability. This document also describes a negative electrode active material produced by growing the primary crystals by heat-treating the above-mentioned tin dioxide spheres, but its cycle stability deteriorates as the average size of the primary crystals increases.

In CARBON 46 (2008) 35-40, there is disclosed a negative electrode active material that is produced by forming a carbon film due to pyrolysis of malic acid on the surface of a tin dioxide particulate of about several tens of nm to 300 nm in size. Concerning a half-cell that uses this negative electrode active material and lithium as a counter electrode, a charge-discharge cycle test is done at a current density of 100 mAg⁻¹ in the voltage range of 0.05 to 1.5 V vs. a Li/Li⁺ electrode. In the test, an initial irreversible capacity of 732 mAhg⁻¹ is observed. This value is better than an initial irreversible capacity (1277 mAhg⁻¹) in a half-cell using a negative electrode active material composed of a tin dioxide particle without a carbon film that has an average diameter of 100 nm or less. The decrease in the discharge capacity after 30 charge-discharge cycles is 1.28% per cycle in the case of the half-cell having the negative electrode active material with the carbon film. Although its cycle stability is better compared with that of the half-cell having the negative electrode active material without a carbon film, where the decrease in discharge capacity is 2.48% per cycle, it is not satisfactory on a practical level.

### BRIEF SUMMARY OF THE INVENTION

1. Problems to be Solved by the Invention

On a practical level, a negative electrode active material that is stable after 200 charge-discharge cycles is desired. However, a negative-electrode active material with a higher discharge capacity than that of the existing graphite negative-electrode active material and with excellent cycle stability that is able to maintain the high discharge capacity over 200 charge-discharge cycles has not yet been identified.

It is therefore an object of the present invention to provide a negative electrode active material based on a composite material of tin oxide and carbon with an improved cycle stability as well as a high discharge capacity.

2. Means for Solving Problems

The inventors, after dedicated consideration, have found that, in the case of a composite material of tin oxide and carbon, when the size of tin oxide particles is shrunk down to nanosize and conjugated in a high-dispersion state, the cycle stability in the alloying reaction zone is improved, and when the size of a carbon powder is shrunk down to nanosize and conjugated in a high-dispersion state, the conversion reaction takes place reversibly and therefore a charge-discharge cycle in the range of 0 to about 2 V vs. a Li/Li⁺ electrode can be realized and discharge capacity can be increased. Moreover, by combining a nanosize carbon powder and a nanosize tin oxide powder in a high-dispersion state, a negative electrode active material with remarkably excellent cyclability that can be charged and discharged in the range of 0 to about 2 V vs. a Li/Li⁺ electrode and that has a higher discharge capacity than that of the existing graphite negative-electrode active material can be obtained. As far as the present invention, the word "powder" means a material composed of particulates of any shape that is not limited to spherical shape but includes acicular, tubular or wormlike shape. A spherical particulate is specifically referred to as a "particle". Moreover, the word "nanosize" means 1 to 500 nm in diameter on average, preferably 1 to 50 nm in diameter on average when the particulate is in a spherical shape, and 1 to 500 nm across on average, preferably 1 to 50 nm across on average when the particulate is in acicular, tubular or wormlike shape.

At first, the present invention provides a first negative electrode active material in which nanosize tin oxide particles are supported in a high-dispersion state on a conductive carbon powder. This negative electrode active material has excellent cycle stability in the alloying reaction zone. As far as the first negative electrode active material, the term "high-dispersion state" means that generally 30% by mass or more, preferably 85% by mass or more, more preferably 95% by mass or more, and particularly 98% by mass or more of primary particles of tin oxide is not aggregated. A non-aggregation ratio of the primary particles is calculated from the observation of the particle state based on images taken by a transmission electron microscope (TEM).

As for the first negative electrode active material, because the nanosize tin oxide particles are supported in a high-dispersion state on the carbon powder, stannum is finely dispersed in a lithium oxide matrix after the conversion reaction and the huge volume change of stannum, which occurs as a result of the occlusion and release of lithium in the reversible alloying reaction, is inhibited. Reactive sites are increased due to the large surface area of the tin oxide particles, and the diffusion distance of lithium ions within the tin oxide particles is decreased because the tin oxide particles are tiny. Furthermore, because the nanosize tin oxide particles are supported in a high-dispersion state on the conductive carbon powder, an adequate distance between the tin oxide particles is ensured and aggregation of stannum during the charge-discharge cycles is inhibited. In addition, through the use of the conductive carbon powder, the stress that occurs as a result of the volume change of stannum that takes place during the occlusion and release of lithium in the alloying reaction is alleviated and the electron conduction path is added to the negative electrode active material. As a result, this negative electrode active material shows excellent cycle stability in a charge-discharge cycle test in the alloying reaction zone.

In the first negative electrode active material, the tin oxide particles with an average diameter of 1 to 10 nm are preferable because the negative electrode active material with particularly stable cyclability can be obtained. In addition, the mass ratio of the carbon powder and the tin oxide particles within the range of 20:80 to 40:60 is preferable because a higher discharge capacity than that of the existing graphite negative electrode active material can be obtained and, moreover, excellent cycle stability can be obtained in the alloying reaction zone.

In the first negative electrode active material, although any carbon powder suffices as long as it has electrical conductivity, the use of nanosize carbon powder, preferably in the form of carbon particles, is preferable because the dispersion state of the nanosize tin oxide particles are much better due to the greater surface area of the carbon powder. Moreover, as is shown below, when the nanosize carbon powder, preferably in the form of carbon particles, is used, a reversible conversion reaction occurs. The use of Ketjen Black (granular oil-furnace black that has a hollow shell construction and has open pores that connect inner and outer surfaces of the shell) is particularly preferable because the tin oxide particles are preferentially supported in the hollow and the shell inhibits the expansion of stannum in the alloying reaction zone.

The present invention also provides a second negative electrode active material in which a tin oxide powder and a nanosize conductive carbon powder are comprised in a high₋dispersion state. In this case, the term "high-dispersion state" means that generally 30% by mass or more, preferably 85% by mass or more, more preferably 95% by mass or more, and particularly 98% by mass or more of primary particulates of the tin oxide powder and the carbon powder is not aggregated. A non-aggregation ratio of the particulates is calculated from the observation of the particulate state based on images taken by using a TEM.

When the nanosize conductive carbon powder is used, the conversion reaction that was regarded as an irreversible reaction and a cause for the large initial irreversible capacity proceeds reversibly and, accordingly, the conversion reaction zone as well as the alloying reaction zone can be utilized for the occlusion and release of lithium. As a result, the charge-discharge cycle in the range of 0 to about 2 V vs. a Li/Li+ electrode can be realized and discharge capacity can be increased.

Although the reason that the conversion reaction proceeds reversibly has not been identified at this moment, the following can be considered as a possible reason. The nanosize conductive carbon powder includes abundant oxygen atoms (oxygen of the surface functional group such as carbonyl group or hydroxyl group, adsorbed oxygen), and in the case of the second negative electrode active material of the present invention, Sn-O-C bonds, where these abundant oxygen atoms mediate, are likely to be formed. Further, lithium oxide produced by the conversion reaction is considered to exist in a metastable state, as shown in the following equation (III). Since a condition is created in which lithium is easily removable from the lithium oxide in the metastable state, it is considered that tin oxide is formed readily and concurrently with the removal of lithium, and the conversion reaction occurs reversibly.

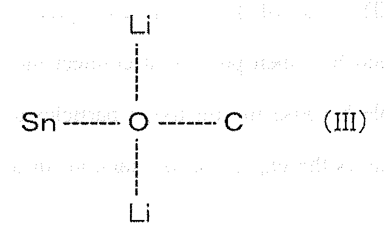

It is preferable to use the tin oxide powder composed of nanosize particulates, especially in the form of particles with an average diameter of 1 to 10 nm, because the surface area of the tin oxide powder is increased and Sn-O-C bonds are readily formed and therefore the metastable state shown in equation (III) is formed in more sites. When the nanosize carbon powder, preferably in the form of carbon particles, and the nanosize tin oxide powder, preferably in the form of tin oxide particles, are combined, the negative electrode active material with remarkably excellent cycle stability is obtained, and it has a higher discharge capacity than that of the existing graphite negative electrode active material and small discharge capacity lowering in a charge-discharge cycle test within the range of 0 to 2V vs. a Li/Li+ electrode.

In the second negative electrode active material, the carbon powder is satisfactory as long as it is composed of nanosize carbon particulates, preferably nanosize carbon particles, and has electric conductivity. However, a larger surface area and a smaller diameter of the carbon powder are preferable, because the carbon powder with a large surface area and a small diameter has abundant oxygen (oxygen of the surface functional group, adsorbed oxygen), and therefore Sn-O-C bonds are formed readily and the above-mentioned metastable state is easily formed. It is particularly preferable that the carbon powder is composed of particles with an average diameter of 10 to 50 nm. It is also particularly preferable that the carbon powder has the surface area of 1000 m² or more. It is also particularly preferable that the carbon powder has oxygen of 5.0 mmol or more per gram. In the present invention, "the amount of oxygen per 1 g of the carbon powder" is calculated based on the TG measurement in a nitrogen atmosphere with a programming rate of 1 degree Celsius/minute in the range of 30 to 1000 degrees Celsius, and based on an assumption that the total amount of weight loss in the range of 150 to 1000 degrees Celsius is in the form of desorption of CO₂. For example, when the amount of weight loss in the range of 150 to 1000 degrees Celsius is 22 mg, the amount of oxygen in 1 g of the carbon powder is calculated to be 1 mmol.

Structural changes in the negative electrode active material obtained by combining tin oxide and carbon, such as volume expansion and aggregation, have been considered only in the alloying reaction zone, and no consideration has been given to these changes in the conversion reaction zone. This is because the conversion reaction was regarded as an irreversible reaction, and only the alloying reaction zone, which is the reversible reaction zone, was used. However, by adopting the negative electrode active material of the present invention, a charge-discharge cycle test in a voltage range including the conversion zone is possible and consideration in the conversion reaction zone is possible. As a result, it has been found that, concerning the negative electrode active material comprising tin oxide and carbon, inhibition of aggregation of the negative electrode active material that is occurred in the conversion reaction zone as well as inhibition of the stress due to volume change in the alloying reaction zone is important in order to obtain a negative electrode active material with an excellent cycle stability in the voltage range including the conversion reaction zone.

To inhibit this aggregation, the use of the nanosize carbon powder with a large surface area is effective, and the existence of this carbon powder and the tin oxide powder in a high-dispersion state is important. Moreover, it is desirable that the conductive carbon powder has inner vacancies and that the tin oxide powder substantially exists in the inner vacancies. This is because it is known that aggregation of the negative electrode active material is especially induced by the tin oxide powder supported on the outer surface of the carbon powder. In the present invention, the term "inner vacancy" includes a hollow of Ketjen Black, an internal or interstitial pore of a carbon nanofiber and a carbon nanotube as well as a pore of porous carbon material. Moreover, the term "the tin oxide powder substantially exists in the inner vacancies" means that 95% by mass or more, preferably 98% by mass or more, and particularly 99% by mass or more of all the tin oxide powder exists within the inner vacancies.

In the second negative electrode active material, usage of Ketjen Black with a hollow shell structure as the conductive carbon powder is also preferable. Since Ketjen Black has a large surface area and abundant oxygen (oxygen of the surface functional group, adsorbed oxygen) on the inner and outer surfaces and the edge surface, Sn-O-C bonds and the above-mentioned metastable state are formed abundantly. Moreover, because the nanosize tin oxide particles are preferentially supported in the hollow of Ketjen Black, aggregation of the negative electrode active material in the conversion reaction zone is inhibited and the shell inhibits the volume expansion of stannum in the alloying reaction zone.

The first negative electrode active material or the second negative electrode active material comprising nanosize tin oxide particles can be produced preferably by utilizing a sol-gel reaction and dispersion in an ultracentrifugal field.

Therefore, the present invention also provides a method for producing the first negative electrode active material or the second negative electrode active material comprising nanosize tin oxide particles, which comprises: a step of introducing a reaction liquid prepared by adding a conductive carbon powder to a solution in which a tin salt is dissolved into a rotatable reactor; and a step of rotating the reactor so as to induce a hydrolysis reaction and a polycondensation reaction of the tin salt while adding shear stress and centrifugal force on the reaction liquid and concurrently support a reaction product obtained on the carbon powder in a high-dispersion state. It is preferable that a reaction accelerator or a reaction inhibitor for a hydrolysis reaction and a polycondensation reaction is not added to the reaction liquid that includes the tin salt and the conductive carbon powder.

In this method, the hydrolysis reaction and the polycondensation reaction of the tin salt can be induced at a nonconventional speed and, at the same time, the reaction product can be supported on the carbon powder in a high-dispersion state. Although the reason that the reactions proceeds at a nonconventional speed has not been identified at this moment, it is considered that mechanical energies of both shear stress and centrifugal force are applied simultaneously to the reaction liquid and the mechanical energies are transformed into chemical energy.

In the above method of the present invention, when a thin film comprising the tin salt is produced in the rotating reactor and the shear stress and the centrifugal force are added to the thin film, a great deal of shear stress and centrifugal force are added to the tin salt in the thin film, and therefore the hydrolysis reaction and the polycondensation reaction can be further accelerated.

For the above reactions, it is preferable to use a reactor composed of concentric cylinders comprising an outer cylinder and an inner cylinder, where the side surface of the inner cylinder is equipped with through-holes and where a sheathing is placed at the aperture of the outer cylinder. By means of centrifugal force produced by rotation of the inner cylinder, the reaction liquid in the inner cylinder is moved to the inner wall surface on the outer cylinder through the through-holes of the inner cylinder, a thin film containing the tin salt is produced on the inner wall surface of the outer cylinder, and the hydrolysis reaction and the polycondensation reaction of the tin salt are accelerated when the shear stress and the centrifugal force are added to the thin film. By making the thin film 5 mm thick or less, or by keeping the centrifugal force added to the reaction liquid in the inner cylinder of the reactor ant 1500 kgms⁻² or more, microparticulation and high dispersion of tin oxide particles can be enhanced.

The first negative electrode active material and the second negative electrode active material are suitable for a lithium ion secondary battery because they have a high discharge capacity and excellent cycle stability. Therefore, the present invention further provides to a lithium ion secondary battery comprising: a negative electrode comprising the negative electrode active material; a positive electrode; and a separator retaining a nonaqueous electrolytic solution placed between the negative electrode and the positive electrode. Moreover, the negative electrode active materials of the present invention can be combined with a positive electrode active material such as active carbon so as to constitute a hybrid capacitor.

3. Advantageous Effect of the Invention

The negative electrode active material in which nanosize tin oxide particles are supported on a conductive carbon powder in a high-dispersion state has excellent cyclability in the alloying reaction zone. Further, because the conversion reaction that was regarded as an irreversible reaction occurs reversibly when using the negative electrode active material of the present invention in which a tin oxide powder and a nanosize conductive carbon powder are comprised in a high-dispersion state, the charge-discharge cycle in the range of 0 to about 2 V vs. a Li/Li+ electrode can be realized and the discharge capacity can be increased. Moreover, by combining a nanosize carbon powder and a nanosize tin oxide powder in a high-dispersion state, a negative electrode active material with remarkably excellent cyclability that has a higher discharge capacity than the existing graphite negative electrode active material and that shows less decrease in the discharge capacity in the charge-discharge cycle test in the range of 0 to approximately 2 V vs. a Li/Li+ electrode can be obtained. Therefore, the negative electrode active material of the present invention offers remarkably promising prospects as a negative electrode active material that can replace graphite in a lithium ion secondary battery.

### BRIEF DESCRIPTION OF THE DRAWINGS

Figure 1 shows powder X-ray diffraction charts concerning negative electrode active materials of the present invention having a different kind of carbon particles.

Figure 2 shows TEM images concerning negative electrode active materials of the present invention having a different kind of carbon particles.

Figure 3 shows TEM images concerning negative electrode active materials of the present invention with a different composition ratio of tin oxide and carbon.

Figure 4 shows a BET surface area concerning negative electrode active materials of the present invention with a different composition ratio of tin oxide and carbon.

Figure 5 shows a BJH pore distribution concerning negative electrode active materials of the present invention with a different composition ratio of tin oxide and carbon.

Figure 6 shows the result of a charge-discharge cycle test in the alloying reaction zone with a half-cell having a negative electrode active material of the present invention.

Figure 7 shows the results of a charge-discharge cycle test in the alloying reaction zone with half-cells having a negative electrode active material of the present invention with a different kind of carbon particles.

Figure 8 shows the results of a charge-discharge test in a voltage range including the conversion reaction zone with half-cells having a negative electrode active material of the present invention with a different composition ratio of tin oxide and carbon.

Figure 9 shows XPS spectra of a negative electrode active material of the present invention in a state-of-charge and a state-of-discharge.

Figure 10 shows SEM images before and after a charge-discharge cycle in a voltage range including the conversion reaction zone concerning negative electrode active materials of the present invention with a different composition ratio of tin oxide and carbon.

Figure 11 shows TEM images before and after a charge-discharge cycle in a voltage range including the conversion reaction zone concerning negative electrode active materials of the present invention with a different composition ratio of tin oxide and carbon.

Figure 12 shows SEM images before and after a charge-discharge cycle in a voltage range where only the conversion reaction occurs, concerning negative electrode active materials of the present invention with a different composition ratio of tin oxide and carbon.

Figure 13 shows the rate characteristics concerning half-cells having a negative electrode active material of the present invention.

Figure 14 shows the relationship between energy density and power density concerning a full-cell having a negative electrode active material of the present invention and a conventional full-cell.

### DETAILED DESCRIPTION OF THE INVENTION

A first negative electrode active material of the invention comprises a conductive carbon powder and a nanosize tin oxide particles that are supported on the conductive carbon powder in a high-dispersion state. This negative electrode active material shows excellent cyclability in a charge-discharge cycle test in the alloying reaction zone.

As the conductive carbon powder, a heretofore known conductive carbon powder can be used without qualification. Examples of the carbon powder include carbon black such as Ketjen Black, acetylene black and channel black, fullerene, carbon nanotube, carbon nanofiber, amorphous carbon, carbon fiber, natural graphite, synthetic graphite, graphitized Ketjen Black, active carbon and mesoporous carbon. Carbon fiber prepared by gas-phase method can also be used. These can be used separately or in a mixture of two or more kinds thereof.

Although the conductive carbon powder does not need to be nanosize, use of a nanosize carbon powder is preferable because the surface area of the carbon powder is increased and the dispersion state of the nanosize tin oxide particles is further improved. It is preferable to use carbon particles with an average diameter of 10 to 50 nm because the dispersed state of the nanosize oxide tin particles can be kept high and stable. It is also preferable to use carbon participles with a relatively flat surface, because aggregation of the nanosize tin oxide particles that are supported can be inhibited. A preferable carbon particle is nanosize-carbon black. It is particularly preferable to use Ketjen Black because, as shown in the following examples, a remarkably fine tin oxide participle can be supported in the hollow and the shell inhibits the expansion of stannum in the alloying reaction zone.

The nanosize tin oxide particles are supported in a high-dispersion state on the conductive carbon powder. Tin dioxide particles or a mixture of tin dioxide particles and tin monoxide particles can be used as the tin oxide particles. The smaller the average diameter (the diameter of primary particles) of the tin oxide particles is, the finer stannum dispersed in the lithium oxide matrix after the conversion reaction is. Therefore, the massive volume change accompanied by the occlusion and release of lithium in the reversible alloying reaction is inhibited, the reaction sites of the tin oxide particles are increased, and the diffusion distance of lithium ions in the tin oxide particles is shortened. As a result, the cyclability of the negative electrode active material improves. The average diameter of the tin oxide particles is preferably 1 to 20 nm, and particularly 1 to 10 nm.

The mass ratio of the conductive carbon powder, preferably Ketjen Black, and the nanosize tin oxide particles is preferably in the range of 20:80 to 40:60, and particularly in the range of 30:70 to 40:60. The bigger the proportion of tin oxide is, the less prone the tin oxide particles are to being supported on the carbon powder in a high-dispersion state. The smaller the proportion of tin oxide is, the smaller the discharge capacity of the negative electrode active material becomes. When the ratio is within the range mentioned above, a discharge capacity higher than that of a conventional graphite negative electrode active material and excellent cycle stability are ensured.

The method for supporting the nanosize tin oxide particles in a high-dispersion state on the conductive carbon powder, preferably the nanosize conductive carbon particles, and particularly Ketjen Black, is not restricted as long as a high-dispersion state is obtained. However, the method of implementing a sol-gel process and dispersion concurrently in an ultracentrifugal field is particularly preferred.

The method to implement a sol-gel process and dispersion concurrently in an ultracentrifugal field comprises: a step of introducing a reaction liquid prepared by adding the carbon powder to a solution in which a tin salt is dissolved into a rotatable reactor; and a step of rotating the reactor so as to induce a hydrolysis reaction and a polycondensation reaction of the tin salt while adding shear stress and centrifugal force on the reaction liquid and concurrently support a reaction product obtained on the carbon powder in a high-dispersion state. With this method, the hydrolysis reaction and the polycondensation reaction of the tin salt can be induced at a nonconventional speed. This is probably because two mechanical energies, namely the shear stress and the centrifugal force can be added to the reaction liquid concurrently and these mechanical energies are transformed into chemical energy. By this method, the reaction product can be supported on the carbon powder in a high-dispersion state at the same time. This method of implementing a sol-gel process and dispersion concurrently in an ultracentrifugal field is disclosed by an example where titanium oxide and ruthenium oxide are supported on carbon powder in a high-dispersion state in JP 2007-160151 A which is presented by the applicant. The description concerning a rotatable reactor and sol-gel reaction using this reactor in this publication can be incorporated into the present specification as a reference in unchanged form. It is preferable that a reaction accelerator or a reaction inhibitor for a hydrolysis reaction and a polycondensation reaction is not added to the reaction liquid that includes the tin salt and the conductive carbon powder.

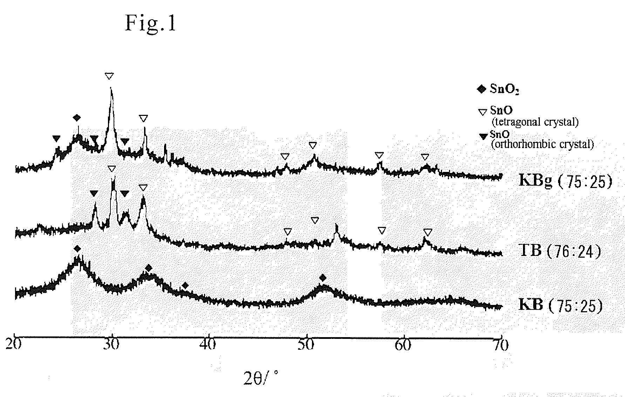

The method of implementing a sol-gel process and dispersion concurrently in an ultracentrifugal field can be performed by using a reactor as disclosed in figure 1 of JP 2007-160151 A, that is, the reactor comprising concentric cylinders of an outer cylinder and an inner cylinder, the inner cylinder having through-holes provided on the side surface thereof, the outer cylinder having a sheathing at the aperture thereof.

In this method, an inorganic salt such as tin dichloride, tin tetorachloride, tin nitrate and tin carbonate, an organic salt such as tetramethoxytin, tetraethoxytin, and tetraisopropoxytin, or a mixture thereof can be used as the tin salt. There is no restriction on a solvent to solve the tin salt as long as it is a liquid that can solve the salt and does not have harmful effects on the reactions. Water, methanol, ethanol, and isopropyl alcohol etc. can be preferably used as the solvent. For hydrolysis, liquid in which NaOH, KOH, Na₂CO₃, NaHCO₃, or NH₄OH etc. is dissolved in the above-mentioned solvent can be used. Water can also be used for hydrolysis of the tin salt.

The solution in which the tin salt has been solved and the conductive carbon powder are introduced into the inner cylinder of the reactor, and then the tin salt and the carbon powder are mixed and dispersed by rotating the inner cylinder. Next, an alkali solution etc. for hydrolysis of the tin salt is added and the inner cylinder is rotated again. The centrifugal force generated by the rotation of the inner cylinder moves the reaction liquid in the inner cylinder to the inner wall surface of the outer cylinder through the through-holes of the inner cylinder, and a thin film including the tin salt is produced on the inner wall surface of the outer cylinder, and this thin film moves up to the upper part of the inner wall of the outer surface. As a result, a hydrolysis reaction and a polycondensation reaction of the tin salt proceed in a short amount of time, probably because shear stress and centrifugal force are added to this thin film and these mechanical energies are transformed to chemical energy, the so-called activation energy, that is necessary for the reactions.

In the above reactions, the thinner the thin film is, the greater the mechanical energies added are. The thickness of the thin film is generally 5 mm or less, preferably 2.5 mm or less, and particularly 1.0 mm or less. The thickness of the thin film can be set by the width of the sheathing of the reactor and the amount of the reaction liquid introduced into the reactor.

The above reactions are considered to be produced by the mechanical energies of shear stress and centrifugal force added to the reaction liquid, and the shear stress and the centrifugal force is produced by the centrifugal force added to the reaction liquid by the rotation of the inner cylinder. The centrifugal force added to the reaction liquid in the inner cylinder is generally 1500 kgms⁻² or more, preferably 70000 kgms⁻² or more, or particularly 270000 kgms⁻² or more.

After the reaction is finished, by stopping the rotation of the inner cylinder, retrieving the carbon powder, and drying the retrieved carbon powder at a temperature of 200 degrees Celsius or less, the negative electrode active material in which the nanosize tin oxide particles are supported in a high-dispersion state on the carbon powder can be obtained.

In the sol-gel method in an ultracentrifugal field using this reactor, as is shown in the following examples, the ratio of nanosize tin dioxide particles and nanosize tin monoxide particles supported on the carbon powder is according to the kind of the carbon powder used. When the nanosize carbon particles that have a large surface area and contain abundant oxygen atoms (oxygen of the surface functional group such as carbonyl group and hydroxy group, adsorbed oxygen) are used, the proportion of tin dioxide particles is increased. When Ketjen Black, which is preferable as a carbon particle, is used, even if a bivalent tin salt is used as a raw material, the resulting nanosize tin oxide particles are composed of only tin dioxide particles as far as can be observed based on the X-ray powder diffraction pattern, and the tin dioxide particles are generally supported in the hollow of Ketjen Black.

A second negative electrode active material of the present invention comprises a tin oxide powder and a nanosize conductive carbon powder in a high-dispersion state. In the second negative electrode active material, the conversion reaction that was formerly thought to be an irreversible reaction and was a cause of large initial irreversible capacity proceeds reversibly. Accordingly, the conversion reaction zone as well as the alloying reaction zone can be used for the occlusion and release of lithium, so that a charge-discharge cycle in the range of 0 to 2 V vs. a Li/Li⁺ electrode can be realized and discharge capacity can be increased.

The nanosize conductive carbon powder contains abundant oxygen atoms (oxygen of the surface functional group such as carbonyl group or hydroxy group, adsorbed oxygen). In the case of the second negative electrode active material, Sn-O-C bonds, where this abundant oxygen mediates, are likely to be formed. Moreover, lithium oxide produced by the conversion reaction is considered to exist in a metastable state, as shown in the above-mentioned equation (III). Since a condition is caused under which lithium is easily removable from the lithium oxide in the metastable state, it is considered that tin oxide is formed readily and concurrently with the removal of lithium, and that the conversion reaction occurs reversibly.

The tin oxide powder in the second negative electrode active material can be composed of tin dioxide, or a mixture of tin dioxide and tin monoxide. The tin oxide powder does not need to be composed of nanosize particulates. However, it is preferable that the tin oxide powder is composed of nanosize particulates in the second negative electrode active material. By the nanosize tin oxide powder, the surface area of the tin oxide powder increase and points of contact with the nanosize carbon powder increase. Therefore, Sn-O-C bonds are formed in more sites and, accordingly, the above metastable state is formed more readily. Moreover, when the average diameter of the tin oxide particulates is small, stannum is finely dispersed in the lithium oxide matrix after the conversion reaction, the massive volume change of stannum accompanied by the occlusion or release of lithium in the reversible alloying reaction is inhibited, the reaction sites of the tin oxide particulates are increased, and the diffusion distance of lithium ions in the tin oxide particulates is shortened. For the nanosize tin oxide powder, nanoparticles, nanowires or nanotubes can be used, however, the use of nanoparticles is preferable. By combining the nanosize carbon particles and the nanosize tin oxide particles, a negative electrode active material with excellent cyclability that has a higher discharge capacity than that of the existing graphite negative electrode active material and that shows less decrease in discharge capacity after 500 or more charge-discharge cycles in a charge-discharge cycle test in the range of 0 to about 2 V vs. a Li / Li⁺ electrode can be obtained.

In the second negative electrode active material, nanosize carbon black such as Ketjen Black, acetylene black and channel black, fullerene, carbon nanotube, carbon nanofiber, amorphous carbon, carbon fiber, natural graphite, synthetic graphite, graphitized Ketjen Black, active carbon, and mesoporous carbon can be used for the nanosize conductive carbon powder. Carbon fiber prepared by gas-phase method can also be used. These carbon powders can be used separately or in a mixture of two or more kinds thereof.

Since it is considered that the conversion reaction reversibly proceeds because Sn-O-C bonds are formed through oxygen in the carbon powder, it is preferable that oxygen atoms are abundantly contained in the nanosize-conductive carbon powder used. Therefore, the carbon powder with a large surface area is preferable and it is also preferable that the surface area of the carbon powder per gram is 1000 m² or more. Moreover, in respect of the amount of oxygen in the carbon powder, it is preferable that the amount of oxygen in 1 g of carbon powder is 5.0 mmol or more. Furthermore, it is preferable that fine particulate carbon powder, preferably the carbon particles with an average diameter of 10 to 50 nm, is used. An example of such a carbon powder includes nanosize particulate carbon black, preferably Ketjen Black.

As detailed in the following examples, it has been found that, in the case of a negative electrode active material that contains a conductive carbon powder and a tin oxide powder in a high-dispersion state, in order to obtain a negative electrode active material with excellent cyclability in a voltage range including the conversion reaction zone, the inhibition of the aggregation of the negative electrode active materials produced in the conversion reaction zone and the inhibition of the stress due to the volume change in the alloying reaction zone are important. To inhibit the aggregation, the use of the nanosize carbon powder with a large surface area is effective, and it is important that this carbon powder and the tin oxide powder exist in a high-dispersion state. Especially, it is preferable that the conductive carbon powder has inner vacancies such as Ketjen Black, carbon nanotube, carbon nanofiber, and porous carbon, and that the tin oxide powder substantially exists in the inner vacancies. This is because it is known that the aggregation of the negative electrode active materials is induced especially by the tin oxide powder supported on the outer surface of the carbon powder.

Therefore, in the second negative electrode active material, it is also preferable that Ketjen Black with a hollow shell structure is used as the conductive carbon powder. This is because Ketjen Black has a large surface area and has a lot of oxygen on the inner and outer surfaces and the edge surfaces, which leads to the abundant formation of Sn-O-C bonds and, accordingly, the abundant formation of the metastable state, as shown in equation (III). Moreover, because the nanosize tin oxide particles are preferentially supported in the hollow of Ketjen Black, the aggregation of the negative electrode active materials that occurs in the conversion reaction zone is inhibited and, moreover, the volume expansion of stannum in the alloying reaction zone is inhibited by the shell.

There is no restriction on the methods that can be used to produce the second negative electrode active material that comprises a nanosize conductive carbon powder and a tin oxide powder in a high-dispersion state as long as a high-dispersion state is realized; however, the above-mentioned sol-gel reaction in an ultracentrifugal field is a preferable method that can be used to produce the second negative electrode active material. With this reaction, nanosize tin oxide particles, preferably tin oxide particles with an average diameter of I to 10 nm, can be supported in a high-dispersion state on the nanosize carbon powder, preferably the carbon particles with an average diameter of 10 to 50 nm and particularly Ketjen Black, and Sn-O-C bonds can be formed in more sites.

The first negative electrode active material and the second negative electrode active material are preferable for a lithium ion secondary battery. Therefore, the present invention also relates to a lithium ion secondary battery having a negative electrode containing the first negative electrode active material or the second negative electrode active material of the present invention, a positive electrode, and a separator that retains an nonaqueous electrolytic solution placed between the negative electrode and the positive electrode.

The negative electrode in the lithium ion secondary battery of the present invention can be formed by placing an active material layer that contains the first negative electrode active material or the second negative electrode active material on a current collector.

As for the current collector, conductive materials including platinum, gold, nickel, aluminum, titanium, steel or carbon can be used. As for the shape of the current collector, an arbitrary form including film, foil, plate, reticulation, expanded metal, or cylinder can be adopted.

The active material layer is formed by using a mixed material prepared by adding where appropriate, to the first negative electrode active material or the second negative electrode active material a binder or a conductive material.

As for the binder, a heretofore known binder including polytetrafluoroethylene, polyvinylidene fluoride, a tetrafluoroethylene-hexafluoropropylene copolymer, polyvinyl fluoride, and carboxymethylcellulose can be used. The amount of the binder used is preferably 1 to 30 % by mass based on the total amount of the mixed material. When the amount used is below 1% by mass or less, the strength of the active material layer is not sufficient, whereas when it is 30% or more by weight, drawbacks such as decreased discharge capacity and excessive internal resistance occur. As for the conductive material, carbon powder such as carbon black, natural graphite, and artificial graphite can be used.

A negative electrode using the mixed material can be prepared by dispersing the electrode active material of the present invention, and other additives where appropriate, in a solvent in which a binder is dissolved, coating the dispersion liquid obtained on a current collector by the doctor blade method or other methods, and drying the liquid on the current collector. It is also possible to add a solvent, where appropriate, to the mixed material obtained, shape it into a predetermined shape, and compress it on a current collector.

As for the separator, a polyolefin fiber nonwoven fabric or a fiberglass nonwoven fabric, for example, is preferable. As for the electrolytic solution retained in the separator, an electrolytic solution that has been prepared by dissolving electrolyte in a nonaqueous solvent is used. A heretofore known nonaqueous electrolytic solution can be used without specific restriction.

As for the solvent of the nonaqueous electrolytic solution, it is preferable that electrically stable ethylene carbonate, propylene carbonate, butylene carbonate, dimethyl carbonate, ethyl methyl carbonate, diethyl carbonate, sulfolane, 3-methyl sulfolane, γ-butyrolactone, acetonitrile, dimethoxyethane, N-methyl-2-pyrrolidone, dimethylformamide, or a mixture thereof is used.

As for the solute of the nonaqueous electrolytic solution, a salt that produces a lithium ion when it is dissolved into an organic electrolytic solution can be used without specific restriction. For example, LiPF₆, LiBF₄, LiClO₄, LiN(CF₃SO₂)₂, LiCF₃SO₃, LiC(SO₂CF₃)₃; LiN(SO₂C₂F₅)₂, LiAsF₆, LiSbF₆, and a mixture thereof can be used. A quaternary ammonium salt or a quaternary phosphonium salt that contains a quaternary ammonium cation or a quaternary phosphonium cation can be additionally used as a solute of the nonaqueous electrolytic solution. For example, a salt composed of a cation with the structure R¹R²R³R⁴N⁺ or R¹R²R³R⁴P⁺ (R¹, R², R³, and R⁴ represent an C1-C6 alkyl group) and an anion selected from PF₆⁻,BF₄⁻, ClO₄⁻, N(CF₃SO₃)₂⁻, CF₃SO₃⁻, C(SO₂CF₃)₃⁻, N(SO₂C₂F5)₂⁻, AsF₆⁻ or SbF₆⁻, or a combination thereof can be preferably used.

As for a positive electrode active material that constitutes the positive electrode, a heretofore known positive electrode active material can be used without specific restriction. For example, a compound oxide of lithium and a transition metal including LiMn₂O₄, LiMnO₂, LiV₃O₅, LiNiO₂ or LiCoO₂, a sulfide including TiS₂ and MoS₂, a selenide including NbSe₃, an oxide of a transition metal including Cr₃O₈, V₂O₅, V₅O₁₃, VO₂, Cr₂O₅, MnO₂, TiO₂, and MoV₂O₈, and a conductive polymer including polyfluorene, polythiophene, polyaniline, and polyparaphenylene can be used.

An active material layer for the positive electrode can be formed by using mixed materials that are produced by adding, where appropriate, to the above-mentioned positive electrode active material a binder or a conductive material as described above in relation to the negative electrode. The positive electrode composed of this mixed material can be prepared by dispersing the positive electrode active material and other additives, where appropriate, in a solvent in which a binder is dissolved, coating the dispersion liquid on a current collector as described above in relation to the negative electrode by the doctor blade method or other methods, and drying the liquid on the current collector. It is also acceptable to add a solvent, where appropriate, to the mixed materials obtained, shape it into a predetermined shape, and compress it on the current collector.

The first negative electrode active material and the second negative electrode active material are preferable as a negative electrode active material for a hybrid capacitor as well as a lithium ion secondary battery. In a hybrid capacitor, active carbon, carbon nanotube, mesoporous carbon etc. can be used as a positive electrode active material, and an electrolytic solution produced by dissolving a lithium salt such as LiPF₆, LiBF₄ and LiClO₄, into a nonaqueous solvent such as ethylene carbonate, dimethyl carbonate and diethyl carbonate can be used.

### EXAMPLES

The following is examples of this invention; however, this invention is not limited to the following examples.

1. Preparation of Negative Electrode Active Material

Example 1:

Into an inner cylinder of a reactor shown in figure 1 of JP 2007-160151 A, which is composed of a pair of outer and inner concentric cylinders with through-holes on the side surface of the inner cylinder and a sheathing at the aperture of the outer cylinder, a liquid, which was produced by dissolving 1.9 g of SnCl₂·2H₂O into 30 mL of water, and 1.3 g of Ketjen Black (trade name: Ketjen Black EC600J, produced by Ketjen Black International, initial particle diameter 34 nm, pore size 4 nm) were introduced. Then, the inner cylinder was rotated for 300 seconds so that a centrifugal force of 70000 kgms⁻² was applied to the reaction liquid, and SnCl₂·2H₂O and Ketjen Black were made to disperse. Next, the rotation of the inner cylinder was stopped once and 16.8 mL of 1 M NaOH aqueous solution was added to the inner cylinder. Then, the inner cylinder was rotated again for 120 seconds so that a centrifugal force of 70000 kgms⁻² was applied to the reaction liquid. In this way, a thin film was formed on the inner wall of the outer cylinder, shear stress and centrifugal force were applied to this thin film, and a hydrolysis reaction and a polycondensation reaction of SnCl₂ proceeded. After stopping the rotation of the inner cylinder, Ketjen Black was retrieved by filtering and dried in a vacuum for 12 hours at 180 degrees Celsius. Ketjen Black is hereinafter abbreviated as KB, and this abbreviation is also used in the figures. In addition, a negative electrode active material where KB is used as the carbon powder and tin oxide and KB are contained at the mass ratio of a:b is described as "KB(a:b)" in the figures.

It was observed by X-ray powder diffraction that tin dioxide was produced in the KB that supported the tin oxide obtained. Moreover, a TG/DTA measurement was implemented in an air atmosphere with a programming rate of 1 degree Celsius per minute, and the composition ratio of tin dioxide and carbon was calculated under an assumption that a decrease in weight at 200 degrees Celsius or more was equivalent to the loss of carbon. The mass ratio thereof was SnO₂:KB = 45:55, which closely matches the ratio of raw materials used for reaction (SnO₂:KB = 50:50). Moreover, it was confirmed by a TEM image that the particle diameter of the tin dioxide particles was 1 to 2 mm and that 98% by mass of the primary particles existed in a deaggregated state.

Example 2:

The procedure described in Example 1 was repeated except that 0.54 g of KB (trade name: Ketjen Black EC600J, produced by Ketjen Black International, initial particle diameter 34 nm_{;} pore size 4 nm) was used.

It was observed that tin dioxide was produced in the KB that supported the tin oxide obtained. Moreover, the composition ratio of tin dioxide and KB converted to mass ratio was SnO₂:KB = 64:36, which closely matches the ratio of raw materials used for reaction (SnO₂:KB = 70:30). Moreover, it was confirmed by a TEM image that the particle diameter of the tin dioxide particles was 1 to 2 nm and that 95% by mass of the primary particles existed in a deaggregated state.

Example 3:

The procedure described in Example 1 was repeated except that 0.33 g of KB (trade name: Ketjen Black EC600J, produced by Ketjen Black International, initial particle diameter 34 nm, pore size 4 nm) was used.

It was observed that tin dioxide was produced in the KB that supported the tin oxide obtained. Moreover, the composition ratio of tin dioxide and KB converted to mass ratio was SnO₂:KB = 75:25, which closely matches the ratio of raw materials used for reaction (SnO₂:KB = 80:20). Moreover, it was confirmed by a TEM image that the particle diameter of tin dioxide particles was 1 to 2 nm and that 85% by mass of the primary particles existed in a deaggregated state.

Example 4:

The procedure described in Example 1 was repeated except that 0.33 g of hydrophilic carbon black (trade name: TOKABLACK#A700F, produced by TOKAI Carbon, primary particle diameter 40 nm) was used. The hydrophilic carbon black is hereinafter abbreviated as TB, and this abbreviation is also used in the figures. In addition, a negative electrode active material where TB is used as the carbon powder and tin oxide and TB are contained at the mass ratio of a:b is described as "TB (a:b)" in the figures.

It was observed that a mixture of tin dioxide, tetragonal tin monoxide and orthorhombic tin monoxide was produced in the TB that supported tin oxide obtained. Moreover, the composition ratio of tin oxide and TB converted to mass ratio was SnO₂:TB = 76:24, which closely matches the ratio of raw materials used for reaction (SnO₂:TB = 80:20). Moreover, it was confirmed by a TEM image that the particle diameter of tin oxide particles was 10 nm or less and that 30% by mass of the primary particles existed in a deaggregated state. Furthermore, the surface area of TB used as the raw material for the reaction was 46.5 m²g⁻¹ per gram of carbon, while the surface area of the TB that supported tin oxide obtained was 106 m²g⁻¹ per gram of carbon. The tin oxide particle was supported on the outer surface of TB.

Example 5:

The procedure described in Example 1 was repeated except that 0.33 g of graphitized Ketjen Black (trade name: Graphitized Ketjen Black, produced by Tokai Carbon, primary particle diameter 40 nm) was used. The graphitized Ketjen Black is hereinafter abbreviated as KBg, and this abbreviation is also used in the figures. In addition, a negative electrode active material where KBg is used as the carbon powder and tin oxide and KBg are contained at the mass ratio of a:b is described as "KBg (a:b)" in the figures.

It was observed that a mixture of tin dioxide, tetragonal tin monoxide and orthorhombic tin monoxide was produced in the KBg that supported tin oxide obtained. Moreover, the composition ratio of tin oxide and KBg converted to mass ratio was SnO₂:KBg = 75:25, which closely matches the ratio of raw materials used for reaction (SnO₂:KBg = 80:20). Moreover, it was confirmed by a TEM image that the particle diameter of tin oxide particles was 5 nm or less and that 30% by mass of the primary particles existed in a deaggregated state. Furthermore, the surface area of KBg used as the raw material for the reaction was 177 m²g⁻¹ per gram of carbon, while the surface area of the KBg that supported tin oxide obtained was 295 m²g⁻¹ per gram of carbon. The tin oxide particles were supported on the outer surface of KBg:

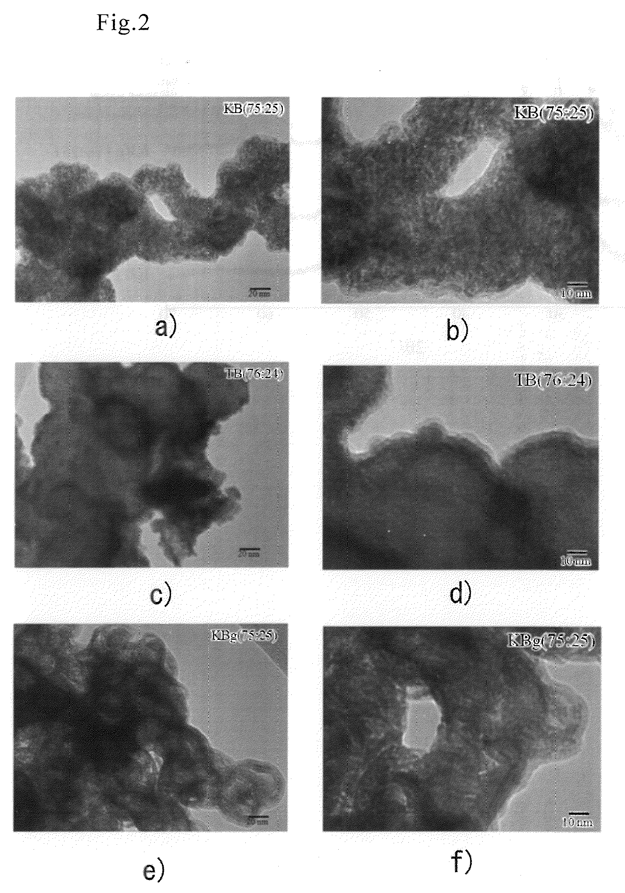

Figure 1 shows X-ray powder diffraction charts of the negative electrode active materials in Examples 3, 4 and 5, and Figure 2 shows TEM images of the negative electrode active materials in Examples 3, 4 and 5. In Figure 2, a) and b) are TEM images of the negative electrode active material in Example 3, c) and d) are TEM images of the negative electrode active material in Example 4, and e) and f) are TEM images of the negative electrode active material in Example 5. In the figure, b), d) and f) are high-resolution images of a), c) and e), respectively. Figures 1 and 2 show that the supported forms of tin oxide particles including the oxidation number of stunnum and the particle diameter are highly influenced by the kind of carbon black used. The reason why tin dioxide particles are produced in Example 3 and a mixture of tin dioxide particles and tin monoxide particles is produced in Examples 4 and 5 is that the amount of oxygen in KB (6.1 mmol per gram) is more than in TB (3.0 mmol per gram) and in KBg (1.0 mmol per gram).

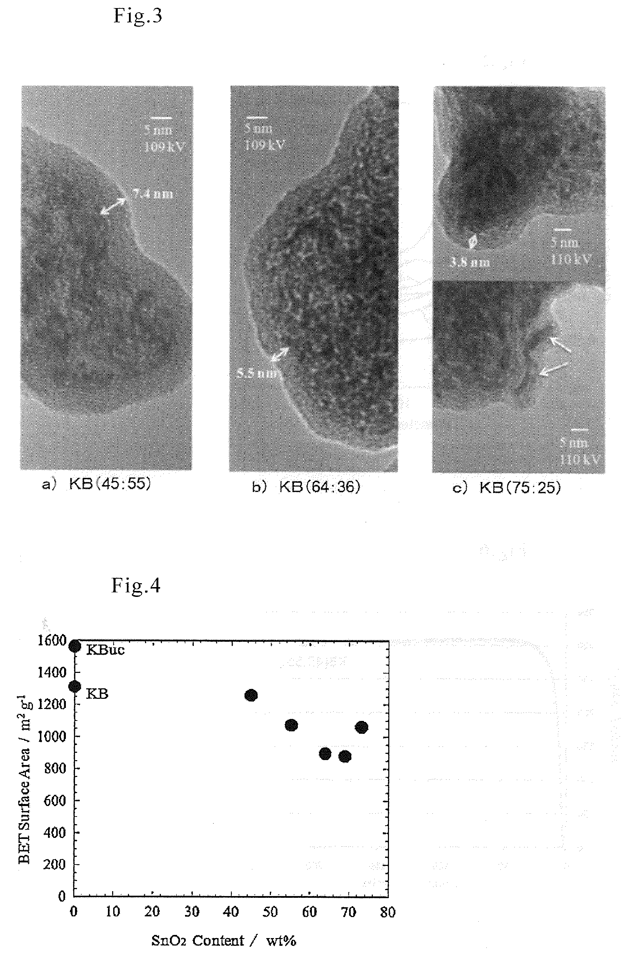

Figure 3 shows TEM images of the negative electrode active materials in Examples 1, 2 and 3. In Figure 3, a) is a TEM image of the negative electrode active material in Example 1, b) is a TEM image of the negative electrode active material in Example 2, and c) is a TEM image of the negative electrode active material in Example 3. In the negative electrode active materials in Examples 1 and 2, tin dioxide particles are enclosed by 7.4 nm and 5.5 nm of a graphene layer, respectively, while in the negative electrode active material in Example 3, a graphene layer was reduced to 3.8 nm and, as shown by an arrowhead in c), tin dioxide particles supported on the outer surface of KB were confirmed.

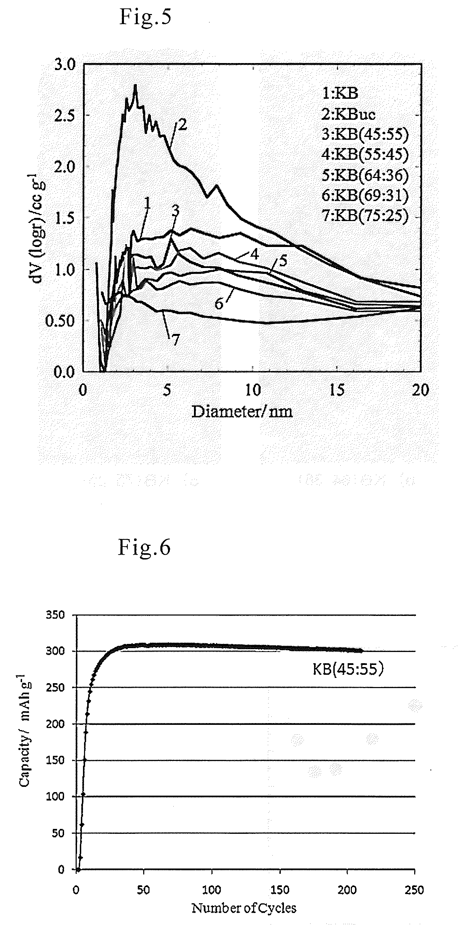

In order to further clarify how tin dioxide particles are supported on KB, the procedure in Example 1 was repeated by using different amounts of KB and, as for the negative electrode active material obtained, the BET surface area and the BJH pore distribution per gram of carbon were measured by a nitrogen adsorption method. Figure 4 shows the relationship between the contained amount of tin dioxide and the BET surface area, while Figure 5 shows the relationship between the contained amount of tin dioxide and the BJH pore distribution. Figures 4 and 5 also show the BET surface area and the BJH pore distribution of KB used as a raw metal for the reaction as well as the particles (referred as KBuc) obtained after centrifugal treatment of only KB in the above reactor.

The surface area of the negative electrode active material including tin dioxide particles and KB decreases as the amount of tin dioxide contained in the negative electrode active material increases, however, it was found that there is a tendency that, when the amount of contained tin dioxide becomes 69% or more, the surface area of the negative electrode active material increases as the contained amount of tin dioxide increases. In the zone in Figure 4 where the BET surface area shows a downward trend, the pore volume of the negative electrode active material decreases as the contained amount of tin dioxide increases, but when the contained amount of tin dioxide becomes 69% or more, there is a tendency that, as the contained amount of tin dioxide increases, the volume of mesopores decreases while the volume of micropores increases. From these results shown in Figures 4 and 5, it is considered that, as the contained amount of tin dioxide in the negative electrode active material increases, fine tin dioxide particles with a particle diameter of 1 to 2 nm are preferentially supported in the hollows of KB and tin dioxide particles that are uncontainable in the hollows are supported on the outer surface of KB. This result coincided very well with the observations shown in the TEM images in Figure 3.

2. Preparation of Half-Cell

A half-cell was prepared in which a negative electrode with each negative electrode active material in Examples 1 to 5, 1 M LiPF₆ ethylene carbonate/diethyl carbonate 1:1 solution as an electrolytic solution, and lithium as a counter electrode were comprised. The negative electrode was produced by adding to 0.7 mg of each negative electrode active material in Examples 1 to 5 polyvinylidene fluoride in the amount of 30% by mass of the total and then shaping the mixture obtained.

3. Evaluation in the Alloying Reaction Zone

A charge-discharge cycle test was implemented for the half-cells having each negative electrode active material in Examples 1 and 3 to 5 in the voltage range of 0 to 1 V (the range where only the reversible alloying reaction occurs) under a constant current condition of the rate 0.2 C (298 mAg⁻¹). This evaluation is an evaluation of a half-cell, but a similar result can be expected in a full-cell having a positive electrode.

Figure 6 shows the change in discharge capacity in the charge-discharge cycle test on the half-cell having the negative electrode active material in Example 1. The capacity retention rate was 98% even after 200 charge-discharge cycles, which indicates excellent cycle stability.

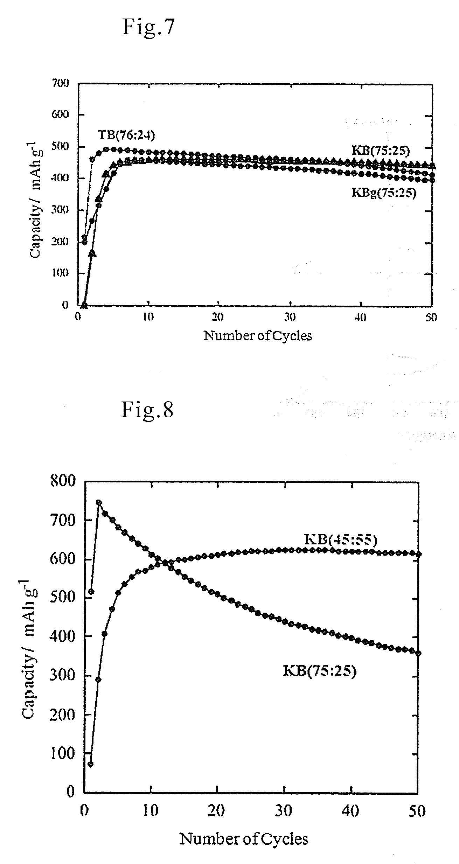

Figure 7 shows the change in discharge capacity after 50 charge-discharge cycles in the half-cells having each negative electrode active materials in Examples 3, 4, and 5. The following Table 1 shows the capacity retention rate after 50 charge-discharge cycles and the rate of capacity decrease per cycle.

**Table 1**

| Active Material | Retention Rate (%) | Decrease Rate (%) |
|---|---|---|
| Example 3 | 96 | 0.08 |
| Example 4 | 84 | 0.32 |
| Example 5 | 87 | 0.31 |

As known from Figure 7, half-cells having each negative electrode active material in Examples 3 to 5 show a higher discharge capacity than the theoretical capacity of graphite (372 Ahg⁻¹) and they have a high capacity retention rate of 80% or more after 50 charge-discharge cycles. Especially, the negative electrode active material in Example 3, where KB is used as the carbon particles, realizes remarkably stable cyclability. Presumably this is because tiny tin dioxide particles of 1 to 2 nm are supported in the hollow of KB with 85% by mass of particles thereof supported in a deaggregated state. That is, tiny stannum is dispersed in a lithium oxide matrix in a state-of-charge, so that the massive volume change of stannum accompanied by the occlusion and release of lithium is inhibited and, additionally, the shell of KB preferably inhibits the volume expansion of stannum in the alloying reaction zone. Further, as tiny tin dioxide particles are supported by KB in a high-dispersion state, the distance between the tin dioxide particles is ensured and aggregation of the tin dioxide particles in the charge-discharge cycles is inhibited. In addition, because the tin dioxide particles are tiny, there are many reaction sites and the diffusion length of lithium ions within the tin oxide particles is shortened, which is considered to act preferably.

4. Evaluation in Voltage range including Conversion Reaction Zone

A charge-discharge cycle test was implemented for the half-cells having each negative electrode active material in Examples 1 to 3 in the voltage range of 0 to 2 V (the range including conversion reaction zone) under a constant current condition of the rate 0.2 C (298 mAg⁻¹). This evaluation is an evaluation of a half-cell, but a similar result can be expected in a full-cell having a positive electrode.

Figure 8 shows the change in discharge capacity during 50 charge-discharge cycles in the charge-discharge cycle test on the half-cells having each negative electrode active material in Examples 1 and 3. The negative electrode active material in Example 3 with the composition ratio of SnO₂:KB = 75:25 (85% by mass in a deaggregated state and in which tin dioxide is supported both in the inner vacancy and on the outer surface of KB (see figure 3c)) showed a large discharge capacity in the early phase, but the discharge capacity gradually decreased as the number of charge-discharge cycles increased. On the other hand, the negative electrode active material in Example 1 with the composition ratio of SnO₂:KB = 45:55 (98% by mass in a deaggregated state and in which tin dioxide is supported in the inner vacancy of KB (see figure 3a)) showed a remarkably stable discharge capacity even after 50 charge-discharge cycles.

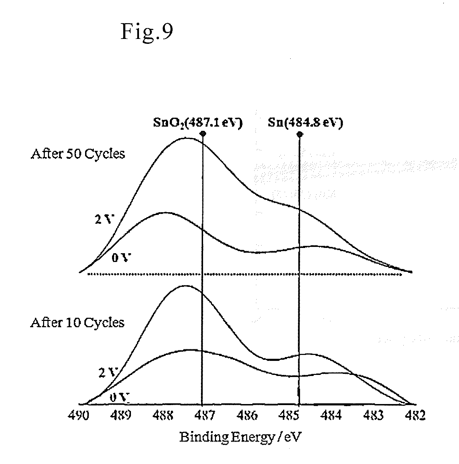

In the half-cell having the negative electrode active material in Example 1, the X-ray photoelectron spectroscopy (XPS) spectra of the negative electrode active material after 10 charge-discharge cycles and after 50 charge-discharge cycles, which terminated with 0 V (lithium occlusion state) and which terminated with 2 V (lithium release state), respectively, were monitored. Figure 9 shows the results obtained. In accordance with a charge from 0 V to 2 V, the peak strength showing Sn (IV) is increased, which shows that tin dioxide is regenerated with the release of lithium. Therefore, it has been confirmed that, with the negative electrode active material of the present invention including the nanosize KB and the nanosize tin dioxide particles, the conversion reaction that was formerly regarded as an irreversible reaction proceeds reversibly even after 50 charge-discharge cycles.

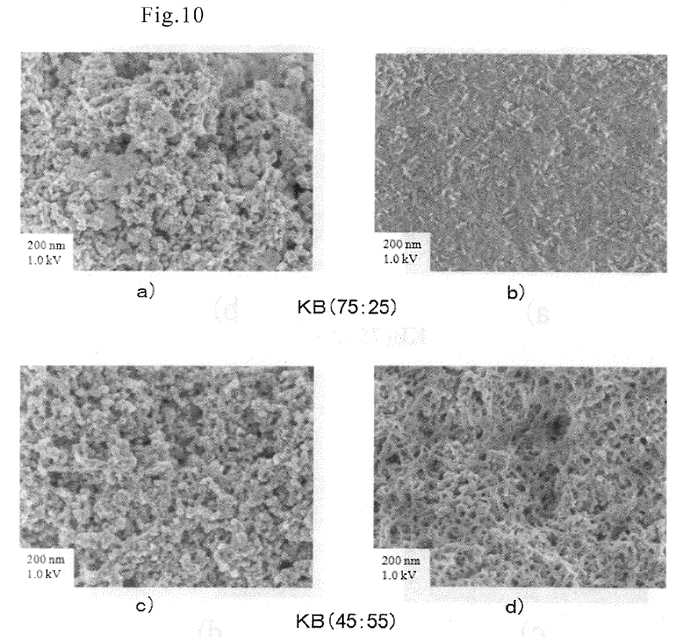

Figure 10 shows scanning electron microscope (SEM) images of the negative electrode active materials before and after the charge-discharge cycle test shown in Figure 8. In Figure 10, a) and b) are SEM images of the negative electrode active material of Example 3, and c) and d) are SEM images of the negative electrode active material of Example 1. In the figure, a) and c) are images before the charge-discharge cycles occur, and b) and d) are images after the charge-discharge cycles occurred. In the negative electrode active material of Example 3, in which the decrease in discharge capacity was observed, the structure of a tin dioxide/KB composite was remarkably changed, but in the negative electrode active material of Example 1, which showed stable discharge capacity in the charge-discharge test, the change in the structure of a tin dioxide/KB composite was slight.

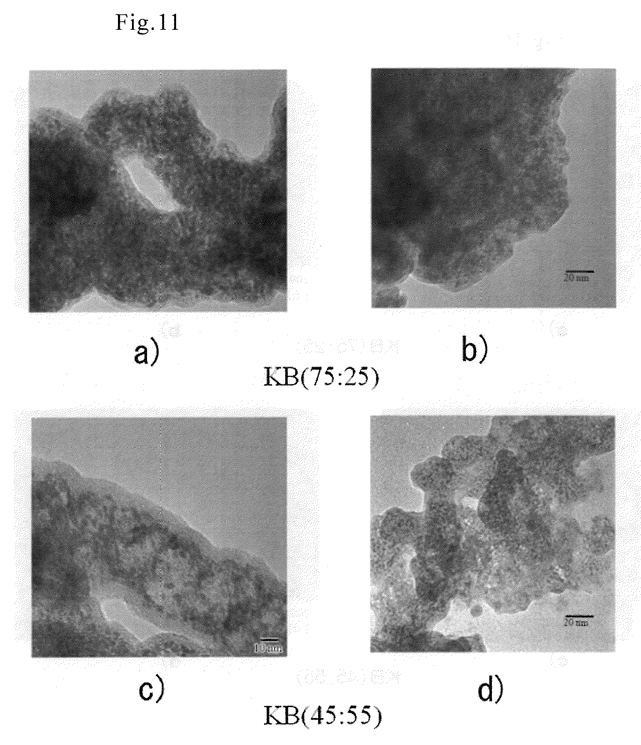

Figure 11 shows TEM images of the negative electrode active materials before and after the charge-discharge cycle test shown in Figure 8. In Figure 11, a) and b) are TEM images of the negative electrode active material of Example 3, and c) and d) are TEM images of the negative electrode active material of Example 1. In the figure, a) and c) are images before the charge-discharge cycles occur, and b) and d) are images after the charge-discharge cycles occurred. In the negative electrode active material of Example 3, in which the decrease in discharge capacity was observed in the charge-discharge cycle test, aggregations of 100 nm or more were observed and the structure of the tin dioxide/KB composite was destroyed. However, in the negative electrode active material of Example 1, which showed stable discharge capacity in the charge-discharge test, no aggregation was observed and the structure of the tin dioxide/KB composite was maintained.

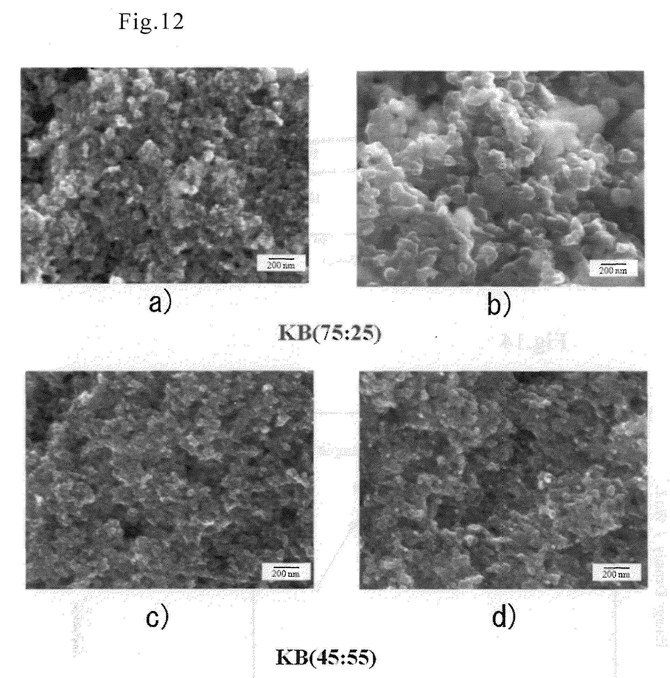

To separate the change of negative electrode active materials in the conversion reaction zone and the change of negative electrode active materials in the alloying reaction zone, a 5 charge-discharge cycles test was implemented for the half-cells having each negative electrode active material in Examples 1 and 3 under a constant current condition of the rate 0.2 C in a voltage range of 0.7 to 2 V. Figure 12 shows SEM images of the negative electrode active materials before and after the charge-discharge cycles test. In Figure 12, a) and b) are SEM images of the negative electrode active material of Example 3, and c) and d) are SEM images of the negative electrode active materials of Example 1. In the figure, a) and c) are images before the charge-discharge cycles occur, and b) and d) are images after the charge-discharge cycles occurred. In the negative electrode active material of Example 3, in which the decrease in discharge capacity was observed in the charge-discharge cycle test, remarkable volume expansion and aggregation of the tin dioxide/KB composite were observed. On the other hand, in the negative electrode active material of Example 1, in which the discharge capacity was stable in the charge-discharge cycle test, hardly any structural change in the tin dioxide/KB composite was observed.

Since the alloying reaction hardly proceeds in the voltage range from 0.7 to 2 V, the volume expansion and aggregation of the tin dioxide/KB composite in the negative electrode active material of Example 3 are considered to be caused by lithium oxide produced by the conversion reaction on the outer surface of KB. Moreover, because a structural change in the tin dioxide/KB composite was hardly observed in the negative electrode active material of Example 1, it can be considered that the volume expansion and aggregation of the tin dioxide/KB composite in the conversion reaction is inhibited when tin dioxide exists in the inner vacancy of KB.

From the above-mentioned results, the decrease in the discharge capacity in the charge-discharge cycle test of the half-cell having the negative electrode active material of Example 3, which is shown in Figure 8, is considered to arise from tin dioxide being supported on the outer surface of KB. That is, it is considered that lithium oxide produced from tin dioxide, which is supported on the outer surface of KB, after the conversion reaction, aggregates and the conductive property of the negative electrode active material decreases, so that the electron conductive path is destroyed, and the volume expansion of the negative electrode active material becomes remarkable as a consequence of the alloying reaction following the conversion reaction, resulting in pulverization of the negative electrode active material and decreased discharge capacity.

To gain a negative electrode active material with an excellent cyclability even in the voltage range including the conversion reaction zone, it is important to inhibit aggregation of the negative electrode active material. To inhibit this aggregation, it is important that the carbon powder and the tin oxide powder exist in a high-dispersion state. The results of the charge-discharge cycle test shown in Figure 8 also shows the difference in the aggregate state of the tin oxide particles (98% by mass of the non-aggregation rate in Example 1 and 85% by mass of the non-aggregation rate in Example 3).

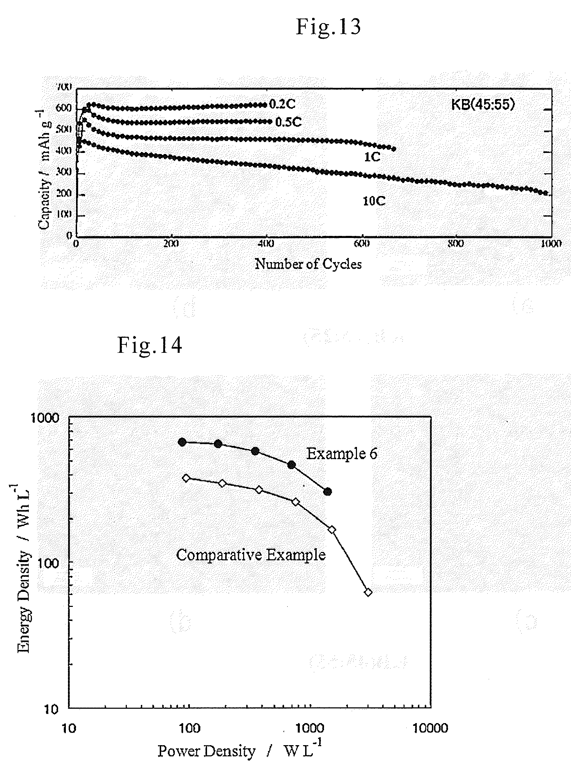

Figure 13 shows rate property on the half-cell having the negative electrode active material of Example 1. In a voltage range including the conversion reaction zone, hardly any decrease was observed after discharge capacity became stable and excellent cyclability was shown at the rates 0.2 C and 0.5 C. At the rate 1 C, the capacity retention rate was stable until 600 charge-discharge cycles occurred. At the rate 10 C, a modest decrease in discharge capacity was observed. The rate 10 C is considered to be the rate limit in the half-cell. However; the rate 10 C corresponds to 40 C when it is converted to the existing graphite negative electrode active material. Therefore, this is quite a high value.

The following Table 2 summarizes the initial discharge capacity (after stabilization) and the capacity retention rate after 100 charge-discharge cycles in a charge-discharge cycle test at the rate 0.2 C on the half-cells having each negative electrode active material of Examples 1 and 2. As is shown in Table 2, these negative electrode active materials show a higher discharge capacity than the theoretical capacity of graphite (372 mAhg⁻¹) and show excellent cyclability in the voltage range including the conversion reaction zone.

**Table 2**

| Active Material | Discharge Capacity (mAhg-1) (%) | Retention Rate |
|---|---|---|
| Example 1 | 623 | 99 |
| Example 2 | 676 | 93 |

5. Evaluation of Full-Cell

a) Preparation of Battery Cell

Example 6:

A negative electrode was prepared by adding to the negative electrode active material in Example 1 polyvinylidene difluoride in the amount of 15% by mass of the total amount, dispersing it in N-methyl-2-pyrrolidone, and drying it on a Cu foil. A positive electrode was prepared by adding to lithium cobalt oxide polyvinylidene difluoride in the amount of 4% by mass of the total amount, dispersing it in N-methyl-2-pyrrolidone, and drying it on an Al foil. An electrolytic solution was 1.0 M LiPF₆ ethylene carbonate/diethyl carbonate 1:1 solution. A battery cell was thereby prepared.

Comparative Example

The procedure in Example 6 was repeated except that hard carbon was used as a negative electrode active material.

b) Evaluation of Battery Cell

For each battery cell in Example 6 and in the Comparative Example, a charge-discharge measurement was implemented at current densities of 0.2, 0.4, 0.8, 1.6, and 3.2 mA/cm² in a voltage range of 4.5 to 1.0 V, and the energy density and the power density per liter of the electrode volume were calculated. The results thereof are shown in Figure 14. The high-energy device in Example 6 has a higher energy density and a higher power density than the device in Comparative Example.

### INDUSTRIAL APPLICABILITY

The negative electrode active material of the present invention is promising as a negative electrode active material that can substitute graphite because it has high capacity and remarkably excellent cyclability. It can be suitably used in a next-generation lithium ion secondary battery and also preferably used as a negative electrode active material in a hybrid capacitor.

## Claims

1. A negative electrode active material in which nanosize tin oxide particles are supported in a high-dispersion state on a conductive carbon powder.

2. The negative electrode active material according to Claim 1, wherein 30 % by mass or more of primary particles of tin oxide is not aggregated.

3. The negative electrode active material according to Claim 1 or 2, wherein the tin oxide particles have an average diameter of 1 to 10 nm.

4. The negative electrode active material according to any one of Claims 1 to 3, wherein the carbon powder is composed of nanosize particles.

5. The negative electrode active material according to any one of Claims 1 to 4, wherein the carbon powder is composed of Ketjen Black.

6. The negative electrode active material according to any one of Claims **1** to **5,** wherein a mass ratio of the carbon powder and the tin oxide particles is within a range of 20:80 to 40:60.

7. A negative electrode active material comprising a nanosize conductive carbon powder and a tin oxide powder in a high-dispersion state.

8. The negative electrode active material according to Claim **7,** wherein 30 % by mass or more of primary particulates of the carbon powder and the tin oxide powder is not aggregated.

9. The negative electrode active material according to Claim **7** or Claim **8,** wherein the tin oxide powder is composed of nanosize particles.

10. The negative electrode active material according to Claims **7** to **9,** wherein the tin oxide powder is composed of particles having an average diameter of 1 to 10 nm.

11. The negative electrode active material according to Claim **9** or Claim **10,** wherein the carbon powder has inner vacancies and the tin oxide powder substantially exists in the inner vacancies.

12. The negative electrode active material according to any one of Claims **7** to **11,** wherein the carbon powder is composed of Ketjen Black.

13. The negative electrode active material according to any one of Claims **7** to **12**, wherein the carbon powder is composed of particles having an average diameter of 10 to 50 nm.

14. The negative electrode active material according to any one of Claims **7** to **13,** wherein the carbon powder has the surface area of 1,000 m² or more per gram.

15. The negative electrode active material according to any one of Claims **7** to **14,** wherein the carbon powder has oxygen of 5.0 mmol or more per gram.

16. A method for producing a negative electrode active material according to any one of Claims **1** to **6** or Claims **9** to **15** comprising:
a step of introducing a reaction liquid prepared by adding a conductive carbon powder to a solution in which a tin salt is dissolved into a rotatable reactor; and
a step of rotating the reactor so as to induce a hydrolysis reaction and a polycondensation reaction of the tin salt while adding shear stress and centrifugal force on the reaction liquid and concurrently support a reaction product obtained on the carbon powder in a high-dispersion state.

17. The method for producing a negative electrode active material according to Claim **16,** wherein a thin film comprising the tin salt is formed in the rotating reactor, and the hydrolysis reaction and the polycondensation reaction of the tin salt are expedited when the shear stress and the centrifugal force are added to the thin film.

18. The method for producing a negative electrode active material according to Claim **16** or Claim **17,** wherein the reactor comprises concentric cylinders of an outer cylinder and an inner cylinder, the inner cylinder having through-holes provided on the side surface thereof, the outer cylinder having a sheathing at the aperture thereof, so that, by centrifugal force produced by rotation of the inner cylinder, the reaction liquid in the inner cylinder is moved to an inner wall surface of the outer cylinder through the through-holes, the thin film containing the tin salt is formed on the inner wall surface of the outer cylinder, and the hydrolysis reaction and the polycondensation reaction of the tin salt are expedited when the shear stress and the centrifugal force are added to the thin film.

19. The method for producing a negative electrode active material according to Claim **17** or Claim **18,** wherein the thickness of the thin film is 5 mm or less.

20. The method for producing a negative electrode active material according to Claim **18** or Claim **19,** wherein the centrifugal force added to the reaction liquid in the inner cylinder of the reactor is 1500 kgms⁻² or more.

21. A lithium ion secondary battery comprising:
a negative electrode comprising a negative electrode active material according to any one of Claims **1** to **15;**
a positive electrode, and
a separator retaining a nonaqueous electrolytic solution placed between the negative electrode and the positive electrode.
